# EUROPEAN PATENT SPECIFICATION

(11) **EP 2 823 888 B1**
(45) Date of publication and mention of the grant of the patent: **10.05.2017**
(21) Application number: 13758344.9
(22) Date of filing: 04.03.2013
(51) Int. Cl.: B01J 32/00, B01J 21/04, B01J 35/02, B01J 35/10, C01F 7/02

(54) **SURFACE MODIFICATION METHOD OF ALUMINUM OXIDE CARRIER**
VERFAHREN ZUR OBERFLÄCHENMODIFIZIERUNG EINES ALUMINIUMOXIDTRÄGERS
PROCÉDÉ DE MODIFICATION DE SURFACE D'UN SUPPORT D'OXYDE D'ALUMINIUM

(30) Priority: 05.03.2012 CN 201210055808
(43) Date of publication of application: 14.01.2015
(73) Proprietor: Sunshine Kaidi New Energy Group Co., Ltd., Wuhan, Hubei 430223 (CN)
(72) Inventor: ZHENG, Shenke, Wuhan Hubei 430223 (CN); SONG, Dechen, Wuhan Hubei 430223 (CN); ZHAN, Xiaodong, Wuhan Hubei 430223 (CN)
(74) Representative: Zeuner Summerer Stütz
(86) International application number: PCT/CN2013/072117
(87) International publication number: WO 2013/131454

(56) References cited:
- WO-A1-2005/058493
- CN-A- 1 775 696
- CN-A- 102 614 935
- GB-A- 1 481 434
- JP-B2- 2 955 460
- US-A1- 2003 228 457
- US-A1- 2009 111 687

## Description

### FIELD OF THE INVENTION

The invention is related to a technical field of the surface modification of a catalyst carrier, specifically, it is related to a method of surface modification of aluminum oxide carrier.

### BACKGROUND OF THE INVENTION

Aluminum oxide as a catalyst carrier is widely applied in industry. It has excellent mechanical strength and hydrothermal stability. It is widely applied as a catalyst carrier in various industrial fields such as chemical engineering and petroleum processing. As a catalyst carrier, chemical properties (acidity and alkalinity, ability of resistant to corrosion, interactions between metal and carrier, etc.) and physical properties (mechanical strength, thermal conductivity, etc.) of aluminum oxide's surface greatly influent the properties of the catalyst which it carries.

However, as a catalyst carrier, aluminum oxide still has some flaws. First, the mechanical strength of aluminum oxide as a carrier is relative low, especially the abrasion resistance. Under some specific reaction circumstances (such as continuously stirred slurry bed reactor, circulating fluidized bed bioreactor, etc.), the carrier would break down and shorten the working life of catalyst, which further brings in the problem of hard to separation product from catalyst powder. Second, aluminum oxide's acid-resistance is relative low. Under acid environment, surfaces of aluminum oxide are easily to be dissolved and greatly weaken the connection between the active metal and the carrier. The active metal then is easily to be departed from the carrier during reaction. Correspondingly, the life time of catalyst and the quality of product are compromised. Third, the carried active metal has strong interaction with aluminum oxide carrier. The interaction causes it is easy to form aluminate compound with spinel structure which is difficult to be reduced during the calcination process of catalyst. Correspondingly, the reducibility and the utilization efficiency of the active metal are reduced. Thus, it is necessary to modify the surface of aluminum oxide carrier to improve its chemical and physical properties.

Chinese patent (application number 201110004999.3) discloses an aluminum oxide carrier and a method for manufacturing it. The surface of carrier after modification has a layer of spinel structure compound formed by modifying the aluminum oxide with the modification elements M (M could be La, Ce, Pr, Mg, Ca, Sr, Ba, Zn, etc.). The mass fraction of the modification elements M is 0.1 to 10 wt% of the quality of the aluminum oxide which hasn't been modified. This method can reduce the acidity of the surface of the carrier and inhibit the interactions between the active metal on the surface and the carrier, which keeps high activity and stability of hydrogenation catalyst during long-time operation. The method reduces the relative intense interaction between the carried active metal and the aluminum oxide carrier, however, it can't apparently improve the acid resistance and the abrasion resistance of the surface. Chinese patent (application number 200480041633.1) discloses a method for manufacturing a modified catalyst carrier. The carrier could be aluminum oxide, titanium dioxide, magnesium oxide, zirconia, or refractory oxide and its mixture. Monosilicic acid made by TEOS and diluted acid reacts with the carrier to deposit approximate 0.1 to 10.6 Si/nm² on the surface of the carrier, wherein the silicon atom is connected to the carrier material through silicon-oxygen bond. After modification, the abrasion resistance and deaggregation resistance of the carrier are improved. However, it does not efficiently improve the acid resistance and does not efficiently inhibit interactions between carried metal and aluminum oxide carrier. Both of the Above-mentioned patents are utilizing chemical method to form an oxide layer on the surface of the aluminum oxide carrier, which has changed the chemical and physical properties of the surface of the aluminum oxide carrier, improved the abrasion resistance, or inhibited the interactions between carried metal and the carrier. While, the oxide layer is mainly composed of metallic oxide or silicon oxide, the properties of the oxide layer after modification determines the mechanical strength, interactions between carried metal and the carrier, and acid resistance of aluminum oxide after modification. The above-mentioned patents cannot achieve all of these properties at the same time.

The silicon nitride has quite good properties of abrasion resistance, chemical inertness, acid resistance, and thermal conductivity, however, ordinary material made from silicon nitride has relative small specific surface area (below 1 m²/g). It is difficult to increase the fraction of carried active metal, and thus the silicon nitride can't be used directly as a catalyst carrier. If aluminum oxide were modified with silicon nitride, the advantages of both would be combined together, specifically, the new material would get big specific surface area and porous structure from aluminum oxide, and also, it would get high abrasion resistance, chemical inertness, and high acid resistance from silicon nitride. Such new material would have high application value. However, the synthesis condition of silicon nitride is relative strict, e.g., synthesis temperature of silicon nitride is normally beyond 1200°C, which is beyond a crystal transition temperature of most aluminum oxide carrier, and the primary product after synthetizing contains complex impurities. Thus, it cannot utilize an ordinary method to modify the surface of a carrier by synthesizing silicon nitride on the surface of aluminum oxide.

### SUMMARY OF THE INVENTION

In view of the above-described problems, it is one objective of the invention to provide a method for modifying the surface of an aluminum oxide carrier. The method can synthetize silicon nitride on the surface of aluminum oxide carrier under gentle reaction conditions, which improves the various properties of aluminum oxide carrier.

To achieve the above objective, the following technical schemes are provided.
1) Dissolving soluble kazoe into deionized water and preparing kazoe aqueous solution;
2) Soaking an aluminum oxide carrier into the kazoe aqueous solution of step 1) and then drying the aluminum oxide carrier in vacuum environment;
3)Placing the aluminum oxide carrier in a reactor, adding silicon tetrachloride, dropping a Grignard reagent, sealing the reactor, heating the reactor and maintain a temperature for reacting for 3 to 18 hours, wherein the volume ratio of the added silicon tetrachloride and the aluminum oxide carrier is controlled to be 0.5 to 5:1, the heating temperature for reacting is controlled to be 160 to 350°C; and
4) Cooling the reactor, filtering the aluminum oxide carrier, washing the aluminum oxide carrier, drying the aluminum oxide carrier again in vacuum environment to obtain the modified surface of aluminum oxide carrier.

In a preferred class of this embodiment, the soluble kazoe in step 1) are one or more of the followings: sodium azide, potassium azide, ammonium azide, calcium azide, and barium azide.

In a class of this embodiment, the weight percentage concentration of the soluble kazoe in step 1) is controlled to be 5 to 30%, which makes the surface of the aluminum oxide carrier is capable of being covered sufficient concentration of kazoe and at the same time avoid the crystallization of the kazoe.

In another preferred class of this embodiment, the aluminum oxide carrier in step 2) is one or more of the followings: α, γ, δ, κ, or θ crystal form aluminum oxide.

In a class of this embodiment, the temperature for drying the aluminum oxide carrier in vacuum environment is controlled to be 20 to 80°C, and the time for drying is controlled to be 2 to 4 h. Under above-described environment, the moisture on the aluminum oxide carrier is effectively removed, which is good for the synthesis reaction in next step.

In another preferred class of this embodiment, the temperature for heating the reactor in step 3) is controlled to be 180 to 250°C, which is able to efficiently control the reaction being processed normally and avoid decomposing of kazoe compound in high temperature.

In a class of this embodiment, the volume ratio of added silicon tetrachloride and the aluminum oxide powder in step 3) is controlled to be 1 to 2:1, which is able to immerse the silicon tetrachloride completely in the aluminum oxide carrier and enter into channels of the carrier.

In a class of this embodiment, the volume of the Grignard reagent added in step 3) is 0.1 to 2% of the volume of the silicon tetrachloride. The Grignard reagent here effects as a catalyst for accelerating the reaction rate between the silicon tetrachloride and kazoe and ensuring the complete reaction there between.

In another preferred class of this embodiment, in the washing operation of step 4), firstly utilize absolute ethyl alcohol as washing solution, then utilize deionized water as washing solution, which is able to remove organic impurities and chloride side product attached on the surface of aluminum oxide carrier.

In a class of this embodiment, the temperature for drying aluminum oxide carrier in vacuum environment is controlled to be 20 to 80°C, and the time for drying is controlled to be 2 to 4 h.

Advantages of the invention are summarized below: the invention utilizes solvothermal method to synthesize the silicon tetrachloride and aluminum oxide together in a relative low temperature to form a compact silicon nitride layer, which realizes the perfect combination of porous structure of aluminum oxide and high mechanical strength and chemical inertness of silicon nitride, which greatly improves the mechanical strength (especially abrasion resistance) and acid resistance, and which effectively inhibits the interactions between carried metal and carrier. Silicon nitride is a kind of ultra-hard matter and has high abrasion resistance, with which silicon nitride is usually made into some mechanical components such as bearings and leaf of turbine. Therefore, the modified carrier has high abrasion resistance as well. Silicon nitride has good chemical inertness, which enable the modified carrier to efficiently inhibit the interactions between carried metal and carrier. Furthermore, silicon nitride has high acid resistance. It doesn't react with any inorganic acid other than hydrofluoric acid. Therefore, the modified carrier has high acid resistance as well.

The aluminum oxide carrier modified by the invention is suitable for producing metallic catalyst and is capable of efficiently improving the properties and working life of catalyst. In addition, this method efficiently solves the problems of high energy consumption and residual impurities in present technology related to synthesizing silicon nitride material. Moreover, this method is relative simple, is easily to be controlled, has little requirements on equipment, and consumes relative low energy. Therefore, the method is suitable for mass production.

### DETAILED DESCRIPTION OF THE EMBODIMENTS

The invention is explained in further detail below with the reference to the embodiments.

### Example 1

1. Dissolving 200 g ammonium azide into deionized water to prepare aqueous solution having ammonium azide of weight percentage 18%;

2. Pouring into above-mentioned aqueous solution 200 mLγ-aluminum oxide powder whose average particle size is 85 um, bulk density is 1.2 g/mL, specific surface area is 200 m²/g after preroasting process, filtering the aqueous solution after being completely stirred, and drying it in vacuum drying cabinet under a temperature of 50°C for 4 h;

3. Placing dried aluminum oxide carrier in a stainless steel reactor, adding 200 mL silicon tetrachloride, dropping 1 mL Grignard reagent, sealing the reactor, sweeping with high purity nitrogen for 10 min, then raising temperature to 250°C with the rate of 3°C/min, and maintain this temperature for 10 h; and

4. Cooling the reactor to room temperature, opening the reactor and filtering the aluminum oxide carrier, washing the aluminum oxide carrier2 to 3 times successively with absolute ethyl alcohol and deionized water, then drying the aluminum oxide carrier in vacuum drying cabinet with a temperature of 50°C for 4 h to obtain the modified aluminum oxide carrier.

### Example 2

The other operation steps are as same as Example 1, except in step 1), the weight percentage of the ammonium azide is raised to 25%.

### Example 3

The other operation steps are as same as Example 1, except in step 3), the temperature in the stainless steel reactor for maintaining reaction is controlled to be 200°C.

### Example 4

The other operation steps are as same as Example 1, except in step 3), the time for maintaining the temperature is controlled to be 4 h.

### Example 5

1. Dissolving 200 g calcium azide into deionized water to prepare aqueous solution having calcium azide of weight percentage 30%;
2. Pouring into above-mentioned aqueous solution 300 mL cylindrical aluminum oxide carrier whose average grain size is 1.8 mm, bulk density is 0.6 g/mL, particle length is 5 to 6 mm, specific surface area is 150 m²/g, and the weight percentages of γ-aluminum oxide and α-aluminum oxide are respectively 88% and 12%after preroasting process, filtering the aqueous solution after being completely stirred, and drying it in vacuum drying cabinet under a temperature of 80°C for 2 h;
3. Placing dried aluminum oxide carrier in a stainless steel reactor, adding 500 mL silicon tetrachloride, dropping5 mL Grignard reagent, sealing the reactor, sweeping with high purity nitrogen for 10 min, then raising temperature to 350°C with the rate of 3°C/min, and maintain this temperature for reaction for 3 h; and
4. Cooling the reactor to room temperature, opening the reactor and filtering the aluminum oxide carrier, washing the aluminum oxide carrier 2 to 3 times successively with absolute ethyl alcohol and deionized water, then drying the aluminum oxide carrier in vacuum drying cabinet with a temperature of 70°C for 3 h to obtain the modified aluminum oxide carrier.

### Example 6

The other operation steps are as same as Example 5, except in step 2), the cylindrical aluminum oxide carrier is substituted for spherical aluminum oxide carrier having Φ 3 mm particle size mm and the aluminum oxide carrier is composed of 20% δ-aluminum oxide and 80% θ-aluminum oxide in weight percentage.

### Example 7

1. Dissolving 100 g sodium azide and 100 g potassium azide into deionized water to prepare mixture aqueous solution, wherein the weight percentages of sodium azide and potassium azide are both 10%;
2. Pouring into above-mentioned aqueous solution 200 mLθ-aluminum oxide powder whose average particle size is 150 um, filtering the aqueous solution after being completely stirred, and drying it in vacuum drying cabinet under a temperature of 30°C for 3 h;
3. Placing the dried aluminum oxide carrier in a stainless steel reactor, adding 300 mL silicon tetrachloride, dropping2 mL Grignard reagent, sealing the reactor, sweeping with high purity nitrogen for 10 min, then raising temperature to 160°C with the rate of 2°C/min, and maintain this temperature for reaction for 18 h; and
4. Cooling the reactor to room temperature, opening the reactor and filtering the aluminum oxide carrier, washing the aluminum oxide carrier 2 to 3 times successively with absolute ethyl alcohol and deionized water, then drying the aluminum oxide carrier again in vacuum drying cabinet with a temperature of 40°C for 2 h to obtain the modified aluminum oxide carrier.

The tests of physical and chemical properties of aluminum oxide carrier modified by steps 1) to 4) in above-described examples have proceeded. The result is showed in the following Table 1. In Table 1, the contrast sample is non-modified γ-aluminum oxide produced in the same batch of relevant examples.

**Table 1**

| Physical and chemical properties | Modified γ-aluminum oxide | | | | Non-modified γ-aluminum oxide |
|---|---|---|---|---|---|
| | Example 1 | Example 2 | Example 3 | Example 4 | |
| Total specific surface area, m²/g | 201.47 | 198.42 | 200.54 | 201.32 | 218.46 |
| Average pore diameter, nm | 7.68 | 8.13 | 8.35 | 8.28 | 8.95 |
| Total pore volume, mL/g | 0.42 | 0.45 | 0.44 | 0.45 | 0.49 |
| Average particle diameter, um | 84.32 | 89.01 | 85.21 | 86.43 | 85.54 |
| Weight percentage of silicon nitride, wt% | 6.1 | 8.9 | 3.5 | 1.2 | -- |
| Abrasion resistance, um | 76.34 | 86.82 | 72.17 | 65.76 | 52.04 |
| Remark: the abrasion resistance in the table is tested in jet-ring experiment equivalent to ASTMD5757-00. The abrasion resistance is acquired by comparison with average pore diameters after abrasion. | | | | | |

The tests of related physical and chemical properties of aluminum oxide carrier modified by steps 1) to 4) in Example 7 have proceeded. The result is showed in the following Table 2. In Table 2, the contrast sample is non-modified θ-aluminum oxide produced in the same batch of aluminum oxide of examples.

**Table 2**

| Physical and chemical properties | Modified θ-aluminum oxide | Non-modified θ-aluminum oxide |
|---|---|---|
| Total specific surface area, m²/g | 177.3 | 180.5 |
| Total pore volume, mL/g | 0.88 | 0.91 |
| Weight percentage of silicon nitride, wt% | 7.6 | -- |
| Abrasion resistance, um | 124.52 | 30.21 |
| Remark: the abrasion resistance in the table is tested in jet-ring experiment equivalent to ASTMD5757-00. The abrasion resistance is acquired by comparison with average pore diameters after abrasion. | | |

According to the data of Table 1 and Table 2, the aluminum oxide carrier modified in the invention, doesn't show apparent differences in properties of porous structure (total specific surface area, total pore volume, and average pore diameter), which means that the modified aluminum oxide carrier still keeps the properties of porous structure of original carrier and is suitable for being used as a carrier of metal catalyst. In addition, according to the test of abrasion resistance in the jet-ring experiment equivalent to ASTMD5757-00 and comparing the average pore diameters after abrasion, the data shows the average particle diameter of modified carrier is apparently bigger than that of non-modified carrier. It means that the abrasion resistance of carrier is apparently improved and the abrasion resistance is improved following the raising of mass percentage of silicon nitride.

In addition, the data in Table 1 and Table 2 shows that, raising the concentration of kazoe solution is able to increase the amount of kazoe dipped on the surface of carrier. Raising the temperature or prolonging the time in the reaction between silicon tetrachloride and aluminum oxide is able to increase the completeness of reaction there between. All of these factors are able to efficiently raise the weight percentage of silicon nitride and it has the equivalent effect of raising the thickness of silicon nitride layer on the surface of aluminum oxide.

## Claims

1. A method for modifying surface of aluminum oxide carrier, the method comprising:
1) dissolving soluble kazoe into deionized water and preparing kazoe aqueous solution;
2) soakingan aluminum oxide carrier in the kazoe aqueous solution and then drying the aluminum oxide carrier in a vacuum environment;
3) placing the dried aluminum oxide carrier in a reactor, adding silicon tetrachloride, dropping Grignard reagent, sealing the reactor, heating the reactor, and maintaining a temperature for reacting for 3 to 18 hours, wherein the volume ratio of added silicon tetrachloride and the aluminum oxide carrier is 0.5 to 5:1, the temperature for reacting is controlled to be 160 to 350°C; and
4) filtering the aluminum oxide carrier, washing the aluminum oxide carrier, drying the aluminum oxide carrier in the vacuum environment to obtain a modified aluminum oxide carrier.

2. The method of claim 1, **characterized in that** the soluble kazoe is one or more of the followings: sodium azide, potassium azide, ammonium azide, calcium azide, and barium azide.

3. The method of claim 1 or 2, **characterized in that** a weight percentage concentration of the soluble kazoe in step 1) is controlled to be 5 to 30%.

4. The method of claim 1 or 2, **characterized in that** the aluminum oxide carrier is one or more of the followings: α, γ, δ, κ, or θ crystal form aluminum oxide.

5. The method of claim 1 or 2, **characterized in that** the temperature for drying the aluminum oxide carrier in the vacuum environment is controlled to be 20 to 80°C, and the time for drying is controlled to be 2 to 4 h.

6. The method of claim 1 or 2 **characterized in that** the temperature for heating the reactor in step 3) is controlled to be 180 to 250°C.

7. The method of claim 1 or 2, **characterized in that** the volume ratio of the silicon tetrachloride and the aluminum oxide carrier added in step 3) is controlled to be 1 to 2:1. tetrachloride and the aluminum oxide added in step 3) is controlled to be 1 carry.

8. The method of claim 1 or 2 **characterized in that** the volume of the Grignard reagent added in step 3) is 0.1 to 2% of the volume of silicon tetrachloride.

9. The method of claim 1 or 2 **characterized in that** in step 4), washing the aluminum oxide carrier successively with absolute ethyl alcohol and deionized water.

10. The method of claim 1 or 2, **characterized in that** in step 4), the temperature for drying the aluminum oxide carrier in vacuum environment is controlled to be 20 to 80°C, and the time for drying is controlled to be 2 to 4 h.

## Patentansprüche

1. Verfahren zur Oberflächenmodifizierung eines Aluminiumoxidträgers, wobei das Verfahren Folgendes umfasst:
1) Auflösen eines löslichen Kazoe in entionisiertem Wasser und Vorbereiten der wässrigen Kazoe-Lösung;
2) Einweichen eines Aluminiumoxidträgers in der wässrigen Kazoe-Lösung und dann Trocknen des Aluminiumoxidträgers in einer Vakuumumgebung;
3) Platzierung des getrockneten Aluminiumoxidträgers in einem Reaktor, Zugeben von Siliziumtetrachlorid, Eintropfen von Grignard-Reagens, Versiegeln des Reaktors, Erwärmen des Reaktors und Aufrechterhalten einer Temperatur zum Umsetzen für 3 bis 18 Stunden, wobei das Volumenverhältnis zwischen dem zugegebenen Siliziumtetrachlorid und dem Aluminiumoxidträger 0,5 bis 5:1 beträgt, die Temperatur zum Umsetzen auf 160 bis 350 °C reguliert ist; und
4) Filtern des Aluminiumoxidträgers, Waschen des Aluminiumoxidträgers, Trocknen des Aluminiumoxidträgers in der Vakuumumgebung, um einen modifizierten Aluminiumoxidträger zu erhalten.

2. Verfahren nach Anspruch 1, **dadurch gekennzeichnet, dass** es sich bei dem löslichen Kazoe um mindestens eines der Folgenden handelt: Natriumazid, Kaliumazid, Ammoniumazid, Calciumazid und Bariumazid.

3. Verfahren nach Anspruch 1 oder 2, **dadurch gekennzeichnet, dass** eine Gewichtsanteilskonzentration des löslichen Kazoe in Schritt 1) auf 5 bis 30 % reguliert ist.

4. Verfahren nach Anspruch 1 oder 2, **dadurch gekennzeichnet, dass** es sich bei dem Aluminiumoxidträger um mindestens einen der Folgenden handelt: Aluminiumoxid in α-, γ-, δ-, κ- oder θ-Kristallform.

5. Verfahren nach Anspruch 1 oder 2, **dadurch gekennzeichnet, dass** die Temperatur zum Trocknen des Aluminiumoxidträgers in der Vakuumumgebung auf 20 bis 80 °C reguliert ist und die Zeit zum Trocknen auf 2 bis 4 Std. reguliert ist.

6. Verfahren nach Anspruch 1 oder 2, **dadurch gekennzeichnet, dass** die Temperatur zum Erwärmen des Reaktors in Schritt 3) auf 180 bis 250 °C reguliert ist.

7. Verfahren nach Anspruch 1 oder 2, **dadurch gekennzeichnet, dass** das Volumenverhältnis zwischen dem Siliziumtetrachlorid und dem Aluminiumoxidträger, das in Schritt 3) zugegeben wird, auf 1 bis 2:1 reguliert ist.

8. Verfahren nach Anspruch 1 oder 2, **dadurch gekennzeichnet, dass** das Volumen des in Schritt 3) zugegebenen Grignard-Reagens 0,1 bis 2 % des Volumens an Siliziumtetrachlorid beträgt.

9. Verfahren nach Anspruch 1 oder 2, **dadurch gekennzeichnet, dass** in Schritt 4) das Waschen des Aluminiumoxidträgers hintereinander mit reinem Ethylalkohol und mit entionisiertem Wasser erfolgt.

10. Verfahren nach Anspruch 1 oder 2, **dadurch gekennzeichnet, dass** in Schritt 4) die Temperatur zum Trocknen des Aluminiumoxidträgers in der Vakuumumgebung auf 20 bis 80 °C reguliert ist und die Zeit zum Trocknen auf 2 bis 4 Std. reguliert ist.

## Revendications

1. Procédé de modification de surface d'un support d'oxyde d'aluminium, le procédé comprenant :
1) la dissolution de kazoe soluble dans de l'eau désionisée et la préparation d'une solution aqueuse de kazoe ;
2) le trempage d'un support d'oxyde d'aluminium dans la solution aqueuse de kazoe et ensuite le séchage du support d'oxyde d'aluminium dans un environnement sous vide ;
3) le placement du support d'oxyde d'aluminium dans un réacteur, l'ajout de tétrachlorure de silicium, l'insertion d'un réactif de Grignard, la fermeture hermétique du réacteur, le chauffage du réacteur et le maintien d'une température de réaction pendant 3 à 18 heures, le rapport de volume du tétrachlorure de silicium ajouté et du support d'oxyde d'aluminium étant compris dans la plage allant de 0,5 à 5:1, la température de réaction étant régulée pour être comprise dans la plage allant de 160 à 350 °C ; et
4) la filtration du support d'oxyde d'aluminium, le lavage du support d'oxyde d'aluminium, le séchage du support d'oxyde d'aluminium dans l'environnement sous vide pour obtenir un support d'oxyde d'aluminium modifié.

2. Procédé selon la revendication 1, **caractérisé en ce que** le kazoe soluble est un ou plusieurs des éléments suivants : l'azoture de sodium, l'azoture de potassium, l'azoture d'ammonium, l'azoture de calcium et l'azoture de baryum.

3. Procédé selon la revendication 1 ou 2, **caractérisé en ce qu'**une concentration en pourcentage en poids du kazoe soluble de l'étape 1) est régulée pour être comprise dans la plage allant de 5 à 30 %.

4. Procédé selon la revendication 1 ou 2, **caractérisé en ce que** le support d'oxyde d'aluminium est un ou plusieurs des éléments suivants : un oxyde d'aluminium de forme cristalline α, γ, δ, κ ou θ.

5. Procédé selon la revendication 1 ou 2, **caractérisé en ce que** la température pour le séchage du support d'oxyde d'aluminium dans l'environnement sous vide est régulée pour être comprise dans la plage allant de 20 à 80 °C, et le temps de séchage est régulé pour être compris dans la plage allant de 2 à 4 h.

6. Procédé selon la revendication 1 ou 2, **caractérisé en ce que** la température pour le chauffage du réacteur de l'étape 3) est régulée pour être comprise dans la plage allant de 180 à 250 °C.

7. Procédé selon la revendication 1 ou 2, **caractérisé en ce que** le rapport en volume du tétrachlorure de silicium et du support d'oxyde d'aluminium ajouté dans l'étape 3) est régulé pour être compris dans la plage allant de 1 à 2:1.

8. Procédé selon la revendication 1 ou 2, **caractérisé en ce que** le volume du réactif de Grignard ajouté dans l'étape 3) est de l'ordre de 0,1 à 2 % du volume du tétrachlorure de silicium.

9. Procédé selon la revendication 1 ou 2, **caractérisé en ce que** dans l'étape 4), le lavage du support d'oxyde d'aluminium est réalisé successivement avec de l'alcool éthylique pur et de l'eau désionisée.

10. Procédé selon la revendication 1 ou 2, **caractérisé en ce que** dans l'étape 4), la température pour le séchage du support d'oxyde d'aluminium dans un environnement sous vide est régulée pour être comprise dans la plage allant de 20 à 80 °C, et le temps de séchage est régulé pour être compris dans la plage allant de 2 à 4 h.
